# EUROPEAN PATENT APPLICATION

(11) **EP 4 700 881 A1**
(43) Date of publication of application: **25.02.2026**
(21) Application number: 25192502.0
(22) Date of filing: 29.07.2025
(51) Int. Cl.: H01M 10/04, H01M 10/0587, H01M 50/533, H01M 50/586, H01M 50/593

(54) **SECONDARY BATTERY, BATTERY PACK AND ELECTRONIC DEVICE**

(30) Priority: 21.08.2024 CN 202422040027 U
(71) Applicant: AESC Japan Ltd., Yokohama-Shi, Kanagawa 220-0012 (JP)
(72) Inventor: ZHANG, Wenjing, Jiangyin City, Wuxi City, 214443 (CN); SHAN, Xueyan, Jiangyin City, Wuxi City, 214443 (CN)
(74) Representative: Becker, Eberhard

(57) **Abstract**

A secondary battery (100) includes an electrode assembly (120), including a first electrode sheet (10), a second electrode sheet (20), and a separator (122). The first electrode sheet includes a first current collector (18), having opposite first surface (181) and second surface (182), partial surfaces of the first surface and the second surface is covered by a first active material layer (16), the first current collector includes an uncoated region (18a); an insulating layer (40), covering at least part of the uncoated region (18a), including a first insulating layer (40a) located at the first surface and a second insulating layer (40b) located at the second surface. The uncoated region of the first current collector bends towards the first surface, a second upper end surface (402) of the second insulating layer (40b) exceeds a first upper end surface (401) of the first insulating layer in a first direction.

## Description

### BACKGROUND

### Technical Field

This disclosure relates to a secondary battery, a battery pack and an electronic device.

### Description of Related Art

In the field of new energy power batteries, a secondary battery refers to a rechargeable battery, also known as a renewable battery or storage battery. Unlike primary batteries, secondary batteries can undergo multiple charge-discharge cycles through reverse charging for repeated use. Secondary batteries generally include electrode assemblies, housings, cover plates, etc. A cylindrical battery refers to a battery containing a cylindrical wound core, which includes a housing and an electrode assembly. The electrode assembly includes a positive electrode sheet, a negative electrode sheet, and a separator located between the positive electrode sheet and the negative electrode sheet. The positive electrode sheet, negative electrode sheet, and separator are stacked together and wound into an electrode assembly, then sealed in the housing.

### SUMMARY

In response to existing issues in the related technology, the purpose of the disclosure is to provide a secondary battery, a battery pack, and an electronic device that at least enhances safety of the secondary battery.

To achieve the above purpose, the disclosure provides a secondary battery, including an electrode assembly. The electrode assembly includes a first electrode sheet, a second electrode sheet, and a separator disposed between the first electrode sheet and the second electrode sheet. The first electrode sheet includes a first current collector, having a first surface and a second surface opposite to each other in a thickness direction of the first current collector, partial surfaces of the first surface and the second surface of the first current collector are covered by a first active material layer, the first current collector includes an uncoated region not covered by the first active material layer; an insulating layer, covering at least part of the uncoated region, the insulating layer includes a first insulating layer located at the first surface and a second insulating layer located at the second surface. The uncoated region of the first current collector bends towards the first surface, a direction from the first active material layer towards the insulating layer is a first direction, and in the first direction, a second upper end surface of the second insulating layer exceeds a first upper end surface of the first insulating layer.

In the above technical solution, by configuring the first insulating layer on a bent side of the uncoated region of the first current collector to be lower than the second insulating layer on the other side, the pressure on the first insulating layer due to the bending of the uncoated region may be reduced, which may avoid the detachment of the first insulating layer on the bent side, thereby avoiding the problem of battery failure caused by foreign matter generated from the detached insulating layer, improving the safety of the secondary battery. Moreover, since the height of the first insulating layer on the bent side is lower, the uncoated region can be bent and pressed down more easily and smoothly.

In some embodiments, in the first direction, a range by which the second upper end surface exceeds the first upper end surface is 0.01mm to 8mm, or, a range by which the second upper end surface exceeds the first upper end surface is 0.01mm to 2mm.

In some embodiments, the electrode assembly has a winding center hole, the first surface is a surface of the first current collector close to the winding center hole; the second surface is a surface of the first current collector deviating from the winding center hole.

In some embodiments, the first current collector includes a bend portion, an orthogonal projection of a start end of the bend portion of the first current collector in the thickness direction of the first current collector does not overlap with the second insulating layer.

In some embodiments, in a winding direction of the electrode assembly, the uncoated region of the first current collector includes multiple bend portions.

In some embodiments, the second electrode sheet includes: a second current collector; a second active material layer, covering at least partial surfaces on both sides of the second current collector in a thickness direction of the second current collector. In the first direction, a distance by which an upper end of the second active material layer exceeds an upper end of the first active material layer is 0.5mm to 1.5mm; in a direction deviating from the first direction, a distance by which a lower end of the second active material layer exceeds a lower end of the first active material layer is 1mm to 2mm; and in the first direction, the first upper end surface of the first insulating layer exceeds the upper end surface of the second active material layer.

In some embodiments, a distance by which the first upper end surface of the first insulating layer exceeds the upper end surface of the second active material layer is 0.5mm to 2mm; in the direction deviating from the first direction, a distance by which one end of the separator exceeds the lower end of the second active material layer is 0.5mm to 1.5mm.

In some embodiments, the first electrode sheet is a positive electrode sheet; colors of the first insulating layer and the second insulating layer are different, the uncoated region of the first current collector is a tab, the secondary battery is a cylindrical battery.

The embodiments of the disclosure also provide a battery pack, including the secondary battery according to any one of the above embodiments.

The embodiments of the disclosure also provide an electronic device, including the battery pack described above.

The beneficial technical effects of this disclosure include:
By configuring the insulating layer on the bent side of the first current collector to have a height difference lower than the insulating layer on the other side, the pressure on the insulating layer on the bent side due to bending may be reduced, which may avoid the detachment of the insulating layer on the bent side, thereby avoiding the problem of battery failure caused by foreign matter generated from the detached insulating layer, improving the safety of the secondary battery. Moreover, since the height of the insulating layer on the inward bent side is lower, it is easier and smoother for the first current collector to be bent and pressed down.

To make the aforementioned more comprehensible, several embodiments accompanied with drawings are described in detail as follows.

### BRIEF DESCRIPTION OF THE DRAWINGS

In order to more clearly explain the technical solutions in the embodiments of the disclosure or in the prior art, a brief introduction will be given below to the drawings required in the description of the implementations or the prior art. Obviously, the drawings described below are some embodiments of the disclosure. For those skilled in the art, other drawings may also be obtained based on these drawings without creative labor.
FIG. 1 shows a schematic view when an electronic device of an embodiment of the disclosure is a vehicle.
FIG. 2 shows a perspective view of a secondary battery according to an embodiment of the disclosure.
FIG. 3 shows a cross-sectional view of a secondary battery according to an embodiment of the disclosure.
FIG. 4 shows a cross-sectional view of a conventional electrode assembly.
FIG. 5 shows a cross-sectional schematic view of a process of bending a first current collector in FIG. 4.
FIG. 6A shows a cross-sectional view of an electrode assembly according to an embodiment of the disclosure.
FIG. 6B is a cross-sectional schematic view of an uncoated region of the first current collector in FIG. 6A.
FIG. 7A shows a schematic view of forming a first electrode sheet using a coating device.
FIG. 7B is a top view schematic view of the first current collector after coating a first active material layer and an insulation layer.
FIG. 7C is a partially enlarged schematic view of a region B of the first electrode sheet after cutting in FIG. 7B.

### DESCRIPTION OF THE EMBODIMENTS

For a better understanding of the spirit of the embodiments of the disclosure, the following further explains it in conjunction with some preferred embodiments of the disclosure.

The embodiments of the disclosure will be described in detail below. Throughout the specification of the disclosure, the same or similar components and components with the same or similar functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "generally", "essentially" and "about" are used to describe and explain small variations. When used in conjunction with an event or circumstance, these terms may refer to examples where the event or circumstance occurs precisely as well as examples where the event or circumstance occurs very approximately.

In this specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivatives (such as "horizontally", "downwardly", "upwardly', etc.) should be interpreted as referring to the orientation described in the discussion or shown in the drawings. These relative terms are used only for descriptive convenience and do not require this disclosure to be constructed or operated in a specific direction.

For ease of description, "first", "second", "third", etc. may be used herein to distinguish different components of a figure or a series of figures. "First", "second", "third", etc. are not intended to describe the corresponding components.

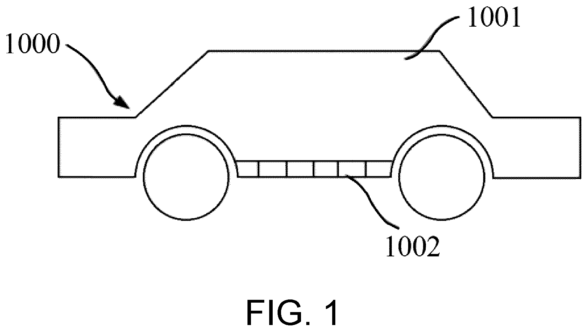

This disclosure provides an electronic device 1000, and for convenience of explanation, the following embodiments will be explained using a vehicle as an example of the electronic device 1000. Referring to FIG. 1, a battery pack 1002 is disposed inside the vehicle, and the battery pack 1002 may be disposed at the bottom, front, or rear of a vehicle body 1001. The battery pack 1002 may be used for power supply to the vehicle, for example, the battery pack 1002 may serve as the operating power source of the vehicle. The working part of the electronic device 1000 is electrically connected with the battery pack 1002 to obtain power support. The vehicle may be a gasoline vehicle, a gas vehicle, or a new energy vehicle, where the new energy vehicle may be a pure electric vehicle, a hybrid vehicle, or a range-extended vehicle, but is not limited thereto. The working part is the vehicle body, with the battery pack 1002 disposed at the bottom of the vehicle body, providing power support for the vehicle's driving or the operation of electrical elements inside the vehicle. However, in some other embodiments, the electronic device 1000 may also be a mobile phone, portable apparatus, laptop computer, ship, spacecraft, electric toy, and electric tool, etc. Spacecraft includes aircraft, rockets, space shuttles, and spaceships, etc.; the working part may obtain electrical energy from the battery pack 1002 and is a unit component that performs corresponding work, such as the fan blade rotation unit of a fan, the dust suction working unit of a vacuum cleaner, etc. Electric toys include fixed or mobile electric toys, for example, game consoles, electric car toys, electric ship toys, and electric aircraft toys, etc. Electric tools include metal cutting electric tools, grinding electric tools, assembly electric tools, and railway electric tools, for example, electric drills, electric grinders, electric wrenches, electric screwdrivers, electric hammers, impact drills, concrete vibrators, and electric planers, etc. The embodiments of the disclosure do not impose special restrictions on the above electronic device 1000.

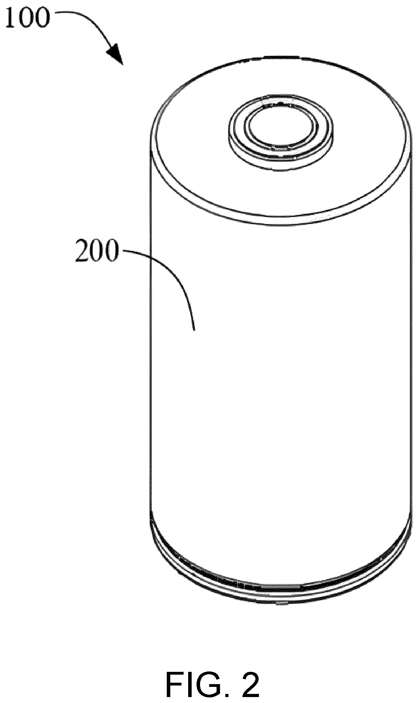

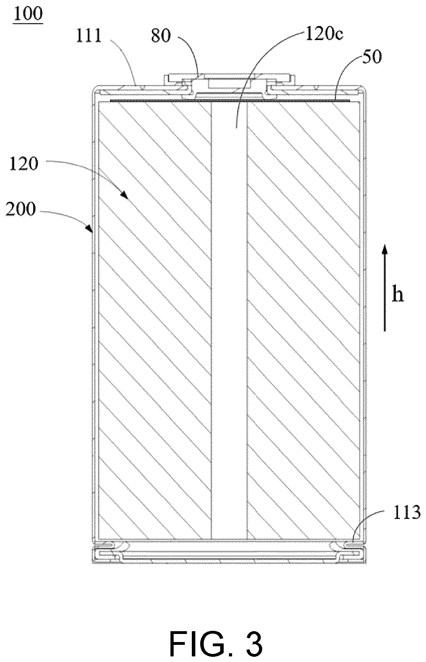

FIG. 2 shows a perspective view of a secondary battery 100 according to an embodiment of the disclosure. FIG. 3 shows a cross-sectional view of the secondary battery 100 according to an embodiment of the disclosure. Referring to FIG. 2 and FIG. 3, in an embodiment where the secondary battery 100 is a cylindrical battery, the secondary battery 100 includes a housing 200, and an electrode assembly 120 sealed and installed inside the housing 200. Referring to FIG. 3, in a height direction h of the secondary battery 100, the electrode assembly 120 is disposed between the end wall 111 and the crimp groove 113 of the housing 200, and the crimp groove 113 may limit the axial movement of the electrode assembly 120 between the end wall 111 and the crimp groove 113. The electrode assembly 120 has a winding center hole 120c at its center in the radial direction.

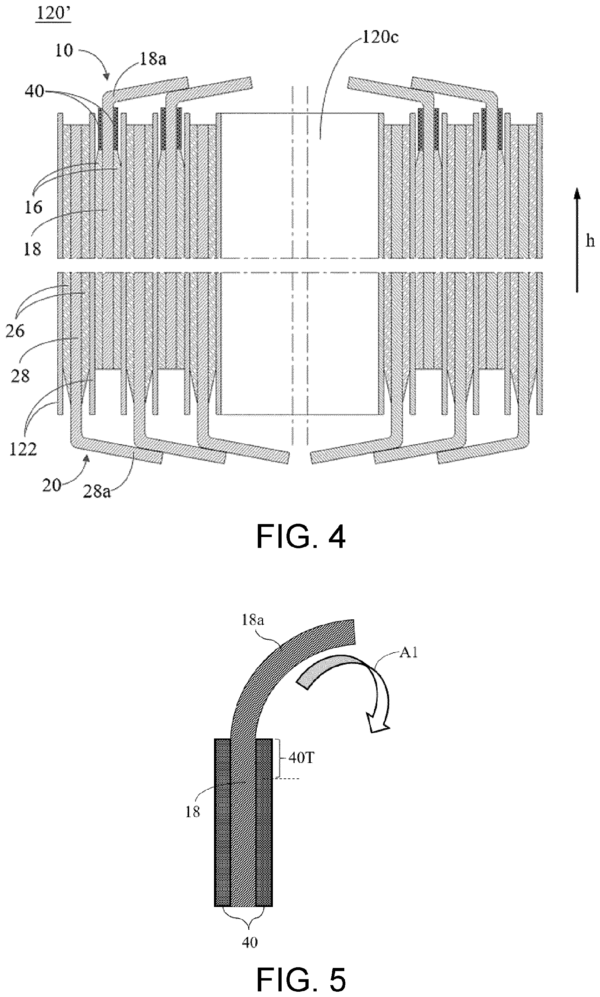

FIG. 4 shows a cross-sectional view of a conventional electrode assembly 120'. Referring to FIG. 4, the conventional electrode assembly 120' is mainly formed by winding a first electrode sheet 10 and a second electrode sheet 20, with a separator 122 disposed between the first electrode sheet 10 and the second electrode sheet 20. Electrolyte may fill the spaces between the first electrode sheet 10, the second electrode sheet 20, and the separator 122.

The first electrode sheet 10 may include a first current collector 18 and a first active material layer 16, with partial surface of the relative surface of the first current collector 18 in its thickness direction being covered by the first active material layer 16. The first current collector 18 includes an uncoated region 18a that is not covered by the first active material layer 16. The first current collector 18 includes a second current collector 28 and a second active material layer 26, with at least partial surface on both sides of the second current collector 28 in its thickness direction being covered by the second active material layer 26. The second current collector 28 includes an uncoated region 28a that is not covered by the second active material layer 26.

In order to minimize the possibility of contact between the first electrode sheet 10 and the second electrode sheet 20, the electrode assembly 120 may also include an insulation layer 40, with the insulation layer 40 covering at least part of the uncoated region 18a of the first current collector 18. The insulation layer 40 may be disposed on both side surfaces of the first current collector 18. The insulation layer 40 may effectively prevent electrical contact between the first electrode sheet 10 and the second electrode sheet 20.

The uncoated regions 18a, 28a of the first current collector 18 and the second current collector 28 may be oriented towards the winding center hole 120c of the electrode assembly 120. The bent uncoated regions 18a, 28a are stacked with each other. An adapting piece 50 (see FIG. 3) may be connected to (for example, welded to) the stacked uncoated regions 18a, and further electrically connected to the terminal 80 (see FIG. 3). Another adapting piece 50 (not shown) may be connected to the stacked uncoated regions 28a, and further electrically connected to the housing 200 (see FIG. 3). After the adapting piece welding is completed, a flattening process may also be implemented to further bend the uncoated regions 18a, 28a of the first current collector 18 and the second current collector 28. Bending the uncoated regions 18a, 28a of the first current collector 18 and the second current collector 28 may reduce the space occupied by the uncoated regions 18a, 28a, thereby improving the energy density of the battery.

FIG. 5 shows a cross-sectional schematic view of a process of bending a first current collector 18 in FIG. 4. Referring to FIG. 5, due to the limited peeling force of the insulation layer 40, during the process of bending the first current collector 18 in the direction of arrow A1, at least part of the insulation layer 40 may detach, for example, a portion 40T of the insulation layer 40 adjacent to the bend may detach. Additionally, during the flattening process after the adapting piece welding is completed, there is also a risk of at least part of the insulation layer 40 detaching, especially on the bending side of the first current collector 18. Since the bend portion of the first current collector 18 has a larger curvature, the risk of detachment of the portion 40T of the insulation layer 40 is greater, which may introduce foreign matter into the electrode assembly, causing battery failure or even short circuit and fire.

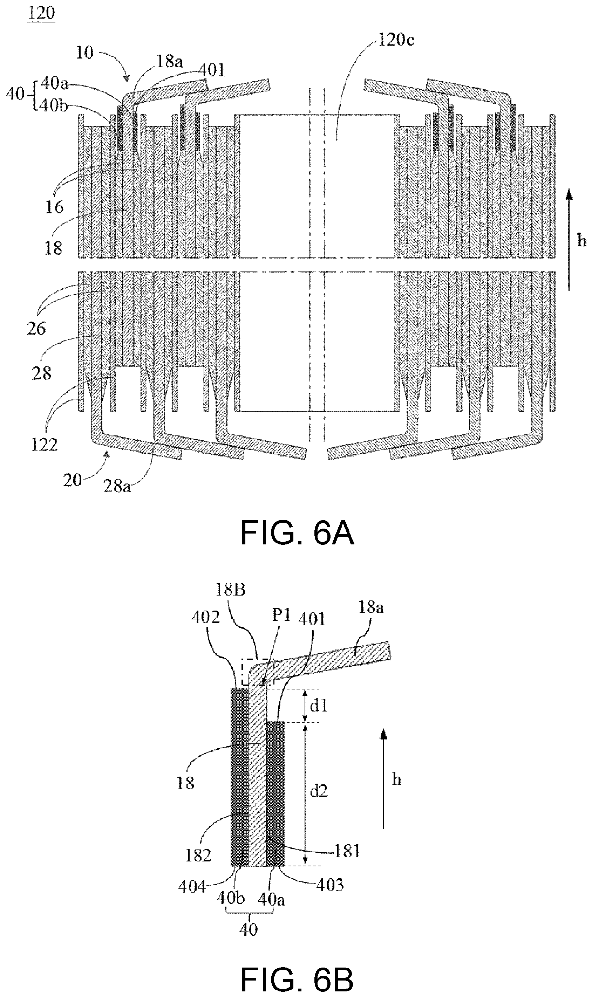

FIG. 6A shows a cross-sectional view of an electrode assembly 120 according to an embodiment of the disclosure. In the electrode assembly 120 according to an embodiment of the disclosure, the electrode assembly 120 is formed by winding the first electrode sheet 10 and the second electrode sheet 20, and a separator 122 is disposed between the first electrode sheet 10 and the second electrode sheet 20. In the first direction from the first active material layer 16 towards the insulation layer 40 (i.e., the height direction h of the electrode assembly 120), one end of the first current collector 18 includes an uncoated region 18a that is not coated with the first active material layer 16. The uncoated region 18a may be used as the first electrode tab. In the direction opposite to the height direction h, one end of the second current collector 28 includes an uncoated region 28a that is not coated with the second active material layer 26. The uncoated region 28a may be used as the second electrode tab.

In the disclosure, the embodiments of the disclosure are explained using the first electrode sheet 10 as the positive electrode sheet and the second electrode sheet 20 as the negative electrode sheet as an example, and in such embodiments, the uncoated region 18a is the positive electrode tab, and the uncoated region 28a is the negative electrode tab. At least partial surface of both sides of the second current collector 28 in its thickness direction is covered by the second active material layer 26.

Taking a lithium-ion battery as an example, the first current collector 18 is a positive current collector. The material of the positive current collector may be aluminum, the first active material layer 16 is a positive active material, the positive active material may be lithium cobalt oxide, lithium iron phosphate, ternary lithium or lithium manganese oxide, etc. The second current collector 28 is a negative current collector. The material of the negative current collector may be copper, the second active material layer 26 is a negative active material, the negative active material may be carbon or silicon, etc. The material of the separator may be PP (polypropylene) or PE (polyethylene), etc.

According to an embodiment of the disclosure, the insulation layer 40 on the opposite surface of the first current collector 18 may have a height difference. Specifically, FIG. 6B is a cross-sectional schematic view of an uncoated region 18a of the first current collector 18 in FIG. 6A. Referring to FIG. 6B, the first current collector 18 has a first surface 181 and a second surface 182 opposite to each other in its thickness direction. The insulation layer 40 covers partial surface of the first surface 181 and the second surface 182 of the uncoated region 18a of the first current collector 18. Specifically, the insulation layer 40 may include a first insulation layer 40a formed on the first surface 181, and a second insulating layer 40b formed on the second surface 182. The insulation layer 40 is located between a bend portion 18B and the first active material layer 16.

The uncoated region 18a of the first current collector 18 is bent towards the first surface 181. In the first direction from the first active material layer 16 to the insulation layer 40, that is, in the height direction h shown in FIG. 6A and FIG. 6B, a second upper end surface 402 of the second insulating layer 40b on the second surface 182 exceeds the first insulation layer 40a on the first surface 181, that is, exceeds a first upper end surface 401 of the first insulation layer 40a. In other words, the second upper end surface 402 of the second insulating layer 40b is higher than the first upper end surface 401 of the first insulation layer 40a in the height direction h. Therefore, the first insulation layer 40a and the second insulating layer 40b on the first surface 181 and the second surface 182 have a height difference d1, and the distance between the second upper end surface 402 and the first upper end surface 401 in the height direction h is the height difference d1.

By configuring the first insulation layer 40a on the bent side to have a height difference lower than the second insulating layer 40b on the other side, the pressure on the first insulation layer 40a on the first surface 181 due to the bending of the uncoated region 18a may be reduced, which may avoid the detachment of the first insulation layer 40a on the first surface 181, thereby avoiding the problem of battery failure caused by foreign matter generated from the detachment of the insulation layer 40, improving the safety of the secondary battery. Moreover, since the top height of the first insulation layer 40a on the first surface 181 on the bent side is lower, it is easier and smoother when the uncoated region 18a is bent and pressed down.

In some embodiments, the range of the height difference d1 by which the second upper end surface 402 of the second insulating layer 40b exceeds the first upper end surface 401 of the first insulation layer 40a is 0.01mm to 8mm, that is, 8mm≥d1≥0.01mm. In some embodiments, a height d2 of the first insulation layer 40a in the height direction h may be about 2 mm, and it should be understood that this value includes process errors in the production process. Considering engineering fluctuations such as coating errors of the insulation layer, setting the range of the height difference d1 to 0.01mm to 8mm can ensure that the height of the first insulation layer 40a on the first surface 181 does not exceed the second insulating layer 40b on the first surface 182. In some embodiments, the range of the height difference d1 by which the second upper end surface 402 exceeds the first upper end surface 401 is 0.01mm to 2mm. The first insulation layer 40a has a first lower end surface 403 opposite to its first upper end surface 401, and the second insulating layer 40b has a second lower end surface 404 opposite to its second upper end surface 402, the first lower end surface 403 and the second lower end surface 404 may be substantially flush in the thickness direction of the first current collector 18 (considering engineering fluctuations such as coating errors of the insulation layer).

The first insulation layer 40a and the second insulating layer 40b with height difference provided by this disclosure may be applicable to various secondary batteries. In embodiments where the secondary battery is a cylindrical battery, the bending direction of the uncoated region 18a is towards the winding center hole 120c of the electrode assembly 120, that is, the first surface 181 is the surface of the first current collector 18 closer to the winding center hole 120c, and the second surface 182 is the surface of the first current collector 18 deviating from the winding center hole 120c. The bent uncoated region 18a may be stacked with each other, and the adapting piece 50 (see FIG. 3) may be connected to the stacked uncoated regions 18a. The technical solution of this disclosure in the application of cylindrical batteries may avoid the detachment of the first insulation layer 40a on the first surface 181 on the bent side, avoid the problem of battery failure caused by foreign matter generated from the detachment of the insulation layer, and improve the safety of the cylindrical battery.

The first current collector 18 includes a bend portion 18B. In the height direction h, a start end P1 of the bend portion 18B exceeds the second upper end surface 402 of the second insulating layer 40b. That is, the orthogonal projection of the start end P1 of the bend portion 18B in the thickness direction of the first current collector 18 does not overlap with the second insulating layer 40b. The start end P1 of the bend portion 18B refers to the position where the first current collector 18 first begins to bend in the height direction h. In this way, the bending of the first current collector 18 will not cause the first insulation layer 40a and the second insulating layer 40b to bend, which may avoid the detachment of the insulation layer, improve the safety of the secondary battery, and make it easier and smoother when the uncoated region 18a is bent and pressed down.

In some embodiments, the materials of the first insulation layer 40a and the second insulating layer 40b on the first surface 181 and the second surface 182 may be substantially the same. In some embodiments, the first insulation layer 40a and the second insulating layer 40b on the first surface 181 and the second surface 182 may both include ceramic material (also known as ceramic filler). The ceramic material, while ensuring insulation, also has higher hardness and can provide more stable support. Especially in cylindrical batteries using all-tab technology, from the safety perspective of cylindrical batteries, ceramic material layers are typically used as insulation layers. However, such ceramic material layers have limited peeling force and are more prone to detachment. Therefore, when the insulation layer is a ceramic material layer, using the first insulation layer 40a and the second insulating layer 40b with height difference may effectively avoid the detachment of the ceramic material layer, avoid battery failure, and improve the safety of the cylindrical battery.

Referring to FIG.6A and FIG.6B, in some embodiments, in the height direction h and the opposite direction of the height direction h, both ends of the second active material layer 26 exceed the first active material layer 16. In some embodiments, in the height direction h, the distance by which the upper end of the second active material layer 26 exceeds the upper end of the first active material layer 16 is 0.5mm to 1.5mm. In the direction deviating from the height direction h, the distance by which the lower end of the second active material layer 26 exceeds the lower end of the first active material layer 16 is 1mm to 2mm. The above distance range by which the upper and lower ends of the second active material layer 26 of the second electrode sheet 20 (negative electrode sheet) exceed the first active material layer 16 of the first electrode sheet 10 (positive electrode sheet) may optimize the energy density performance of the battery.

In some embodiments, in the height direction h, the first upper end surface 401 of the first insulation layer 40a on the first surface 181 exceeds the upper end surface of the second active material layer 26 of the second electrode sheet 20. The distance by which the first upper end surface 401 of the first insulation layer 40a exceeds the upper end surface of the second active material layer 26 may be 0.5mm to 2mm. That is, while the first insulation layer 40a and the second insulating layer 40b on the first surface 181 and the second surface 182 have a height difference to avoid the detachment of the insulation layer, the first upper end surface 401 of the lower first insulation layer 40a is still higher than the second active material layer 26 of the second electrode sheet 20, which may avoid contact between the negative active material layer 26 and the uncoated region 18a (positive electrode tab) of the first current collector 18, providing good insulation.

In addition, in some embodiments, in the direction deviating from the height direction h, one end of the separator 122 (the lower end in FIG.6A) exceeds the lower end of the second active material layer 26, and the exceeding distance may be 0.5mm to 1.5mm. The separator 122 exceeding the negative active material layer 26 may provide good insulation, resulting in higher battery safety.

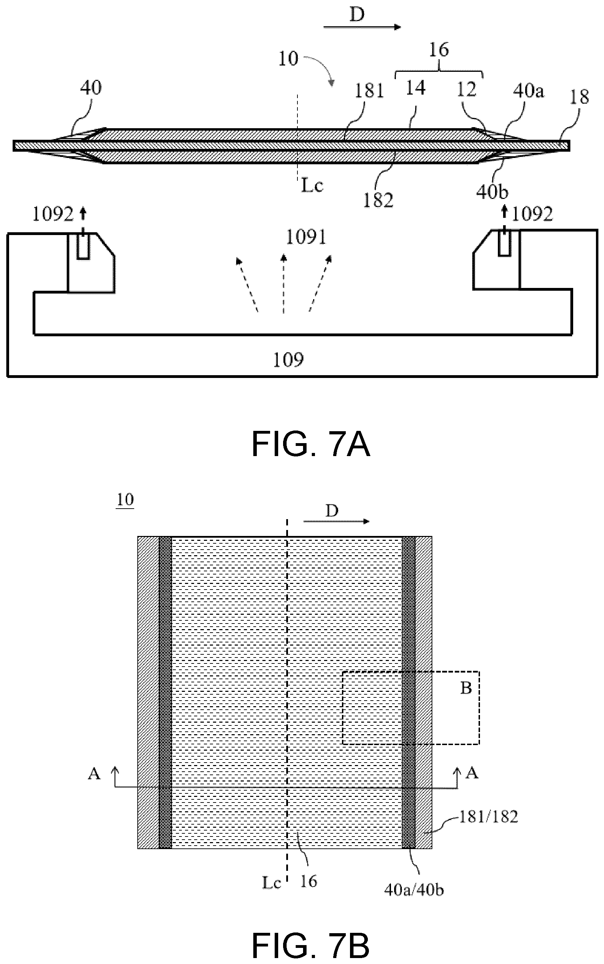

FIG. 7A shows a schematic view of forming a first electrode sheet 10 using a coating device. Referring to FIG.7A, in some embodiments, the insulation layer 40 and the first active material layer 16 on the same side surface may be formed simultaneously. A first outlet 1091 of a coating device 109 may be used for coating the first active material layer 16, and two second outlets 1092 on both sides of the first outlet 1091 of the coating device 109 are used for coating the insulation layer 40.

FIG. 7B is a top view schematic view of the first current collector 18 after coating a first active material layer 16 and an insulation layer 40. The cross-sectional view of the first electrode sheet 10 in FIG.7A may correspond to the cross-sectional view at line A-A in FIG.7B. After coating the first active material layer 16, the first insulation layer 40a, and the second insulating layer 40b on the first surface 181 and the second surface 182 of the first current collector 18 respectively, the top view structures of the first surface 181 and the second surface 182 of the first current collector 18 may both be as shown in FIG.7B, with the difference that the widths of the first insulation layer 40a and the second insulating layer 40b on the first surface 181 and the second surface 182 in a direction D may be different.

Combining FIG.7A and FIG.7B, the first current collector 18 after coating the first active material layer 16 and the insulation layer 40 may be cut along a centerline Lc to obtain individual first electrode sheets 10. In an individual first electrode sheet 10, the first active material layer 16 may include a straight region 14 and a thinned region 12 located at one end of the straight region 14 in the direction D, and the insulation layer 40 may cover at least part of the thinned region 12. The direction D may correspond to the height direction h in FIG.6A and FIG.6B.

Through the above production process of combining electrode sheets, it is possible to achieve differentiation in the widths of the first insulation layer 40a and the second insulating layer 40b coated on the first surface 181 and the second surface 182 in the direction D (this width difference is the height difference d1 in the height direction h in FIG.6B), to solve the problem of the insulation layer 40 detaching during the battery production process, reducing the risk of generating foreign matter.

In some embodiments, the color of the first insulation layer 40a on the first surface 181 and the second insulating layer 40b on the second surface 182 may be different. Specifically, compared to the first insulation layer 40a, the second insulating layer 40b may have color-developing material added, so that the color of the first insulation layer 40a on the first surface 181 may, for example, be more easily recognized by a CCD (charge coupled device) camera than the second insulating layer 40b on the second surface 182. For example, the first insulation layer 40a on the first surface 181 may be a colored ceramic material layer (such as a yellow ceramic material layer, which can be achieved by adding color-developing material), and the second insulating layer 40b on the second surface 182 may be a conventional white ceramic material layer, to distinguish between the first surface 181 and the second surface 182. In a cylindrical battery, the surface density of the active material layer 16 on the first surface 181 and the second surface 182 of the first electrode sheet 10 is usually different, and the positive electrode capacity is also different, so it is necessary to distinguish between the first surface 181 and the second surface 182. For example, after winding, the first insulation layer 40a on the first surface 181 of the first electrode sheet 10 with more obvious color faces toward the winding center hole of the electrode assembly. Through the above configuration, a CCD camera may be used to recognize the colors of the first insulation layer 40a and the second insulating layer 40b, so it can be determined whether the first surface 181 and the second surface 182 of the first electrode sheet 10 are correct.

Referring to FIG.7B, for a cylindrical battery, after coating the first active material layer 16 and the insulation layer 40, the portion of the first current collector 18 of the first electrode sheet 10 that is not coated with the first active material layer 16 and the insulation layer 40 may be cut. During this cutting process, the insulation layer 40 may be used to reduce the generation of burrs.

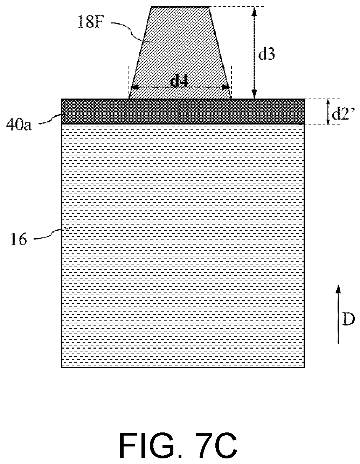

FIG. 7C is a partially enlarged schematic view of a region B of the first electrode sheet 10 after cutting in FIG. 7B. Referring to FIG.7C, in the embodiment of a cylindrical battery, the direction D may correspond to the height direction h in FIG.6A and FIG.6B, and the direction perpendicular to the direction D may correspond to the winding direction of the electrode assembly. In the direction perpendicular to the direction D, the portion of the first current collector 18 not covered by any insulation layer 40 may be cut into multiple spaced segments 18F, with only one segment 18F shown as an example in the partial enlarged view of FIG.7C. In a cylindrical battery, each segment 18F has the bend portion 18B described above with reference to FIG.6A and FIG.6B. In such an embodiment, in the winding direction of the electrode assembly, the uncoated region 18a of the first current collector 18 described above with reference to FIG.6A and FIG.6B may include multiple bend portions 18B.

In some embodiments, a dimension d2' of the first insulation layer 40a in the direction D may be approximately 2 mm, this value includes process errors during production. It should be understood that this dimension d2' is the height d2 of the first insulation layer 40a in FIG.6B. In some embodiments, the range of a length d3 of the segment 18F in the direction D may be 4 mm to 8 mm. In some embodiments, in the direction D, the width of the segment 18F gradually decreases. In the direction perpendicular to direction D, a maximum width d4 of the segment 18F may be approximately 4 mm, this value includes process errors during production.

It should be understood that although the above example shows the insulation layer 40 only disposed on the first current collector 18 of the first electrode sheet 10, in some other embodiments, the insulation layer 40 as described above may also be disposed only on the second current collector 28 of the second electrode sheet 20. Alternatively, the insulation layer 40 as described above may be disposed on both the first current collector 18 of the first electrode sheet 10 and the second current collector 28 of the second electrode sheet 20.

The embodiments of this disclosure also provide a battery pack 1002 (see FIG.1), including the secondary batteries 100 of any one described above, and this battery pack 1002 may have the beneficial effects described above for the secondary battery 100.

The embodiments of this disclosure also provide an electronic device 1000 (see FIG.1), including the battery pack 1002 described above, and this electronic device 1000 may have the beneficial effects described above for the secondary battery 100 and/or the battery pack 1002.

## Claims

1. A secondary battery (100), comprising an electrode assembly (120), the electrode assembly (120) comprising a first electrode sheet (10), a second electrode sheet (20), and a separator (122) disposed between the first electrode sheet (10) and the second electrode sheet (20), wherein the first electrode sheet (10) comprises:
a first current collector (18), having a first surface (181) and a second surface (182) opposite to each other in a thickness direction of the first current collector (18), partial surfaces of the first surface (181) and the second surface (182) of the first current collector (18) are covered by a first active material layer (16), the first current collector (18) comprises an uncoated region (18a) not covered by the first active material layer (16);
an insulating layer (40), covering at least part of the uncoated region (18a), the insulating layer (40) comprising a first insulating layer (40a) located at the first surface (181) and a second insulating layer (40b) located at the second surface (182);
wherein, the uncoated region (18a) of the first current collector (18) bends towards the first surface (181), a direction from the first active material layer (16) towards the insulating layer (40) is a first direction, and in the first direction, a second upper end surface (402) of the second insulating layer (40b) exceeds a first upper end surface (401) of the first insulating layer (40a).

2. The secondary battery (100) according to claim 1, wherein in the first direction,
a range by which the second upper end surface (402) exceeds the first upper end surface (401) is 0.01mm to 8mm, or,
a range by which the second upper end surface (402) exceeds the first upper end surface (401) is 0.01mm to 2mm.

3. The secondary battery (100) according to claim 1, wherein
the electrode assembly (120) has a winding center hole (120c), the first surface (181) is a surface of the first current collector (18) close to the winding center hole (120c);
the second surface (182) is a surface of the first current collector (18) deviating from the winding center hole (120c).

4. The secondary battery (100) according to claim 1, wherein
the first current collector (18) comprises a bend portion (18B), the insulating layer (40) is located between the bend portion (18B) and the first active material layer (16), an orthogonal projection of a start end (P1) of the bend portion (18B) of the first current collector (18) in the thickness direction of the first current collector (18) does not overlap with the second insulating layer (40b).

5. The secondary battery (100) according to claim 4, wherein
in a winding direction of the electrode assembly (120), the uncoated region (18a) of the first current collector (18) comprises a plurality of the bend portions (18B).

6. The secondary battery (100) according to claim 1, wherein
the second electrode sheet (20) comprises:
a second current collector (28);
a second active material layer (26), covering at least partial surfaces on both sides of the second current collector (28) in a thickness direction of the second current collector (28);
wherein, in the first direction, a distance by which an upper end of the second active material layer (26) exceeds an upper end of the first active material layer (16) is 0.5mm to 1.5mm;
in a direction deviating from the first direction, a distance by which a lower end of the second active material layer (26) exceeds a lower end of the first active material layer (16) is 1mm to 2mm;
and in the first direction, the first upper end surface (401) of the first insulating layer (40a) exceeds the upper end surface of the second active material layer (26).

7. The secondary battery (100) according to claim 6, wherein
a distance by which the first upper end surface (401) of the first insulating layer (40a) exceeds the upper end surface of the second active material layer (26) is 0.5mm to 2mm;
in the direction deviating from the first direction, a distance by which one end of the separator (122) exceeds the lower end of the second active material layer (26) is 0.5mm to 1.5mm.

8. The secondary battery (100) according to claim 1, wherein
the first electrode sheet (10) is a positive electrode sheet;
colors of the first insulating layer (40a) and the second insulating layer (40b) are different;
the uncoated region (18a) of the first current collector (18) is a tab, the secondary battery (100) is a cylindrical battery.

9. A battery pack (1002), comprising the secondary battery (100) according to any one of claims 1 to 8.

10. An electronic device (1000), comprising the battery pack (1002) according to claim 9.
